(19) Europäisches Patentamt
European Patent Office
Office européen des brevets

(11) Publication number: 0 005 321 B1

# (12) EUROPEAN PATENT SPECIFICATION

(45) Date of publication of patent specification: 14.04.82

(51) Int. Cl.[3]: C 07 F 9/42, A 01 N 57/34

(21) Application number: 79300555.4

(22) Date of filing: 04.04.79

## (54) Derivatives of N-trifluoroacetyl N-phosphonomethylglycine dichloride, their preparation and their use as herbicides.

(30) Priority: 06.04.78 US 894070

(43) Date of publication of application: 14.11.79 Bulletin 79/23

(45) Publication of the grant of the patent: 14.04.82 Bulletin 82/15

(84) Designated Contracting States: BE CH DE FR GB NL SE

(56) References cited:
FR - A - 2 128 777
FR - A - 2 129 327
US - A - 3 970 695

(73) Proprietor: MONSANTO COMPANY
Patent Department 800 North Lindbergh Boulevard
St. Louis, Missouri 63166 (US)

(72) Inventor: Franz, John Edward
9831 Meadowfern
Crestwood Missouri 63126 (US)

(74) Representative: Nash, Brian Walter et al,
Monsanto House 10-18 Victoria Street
London, SW1H 0NQ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 005 321 B1

Derivatives of N-trifluoroacetyl N-phosphonomethylglycine dichloride, their preparation and their use as herbicides

This invention relates to N-trifluoroacetyl-N-phosphonomethylglycine dichloride derivatives, to herbicidal compositions containing same and to herbicidal methods. More particularly, this invention relates to N-trifluoroacetyl-N-phosphonomethylglycine trichlorides and to the monoesters of such compound.

In accordance with U.S. Patent No. 3,970,695, issued July 20, 1976, N-perfluoroacyl-N-phosphonomethylglycines of the formula

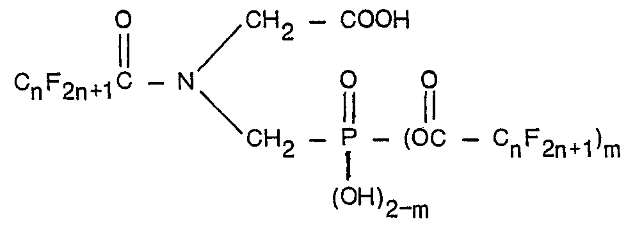

wherein n is an integer of from 1 to 4 and m is 1 or 0 are produced by reacting a perfluoroacyl anhydride with N-phosphonomethylglycine in the presence of a perfluoroalkanoic acid to form the compound of the formula wherein m is 1 and then by hydrolysis to form the compounds wherein m is 0.

N-phosphonomethylglycine, its salts, amides, esters and other derivatives are disclosed in U.S. Patent No. 3,799,758 and are shown to be post-emergent herbicides. In columns 1 and 2 of U.S. Patent No. 3799758 it states "The N-phosphonomethylglycines of this invention are

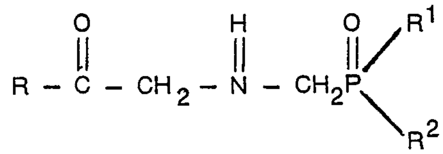

wherein R, $R^1$ and $R^2$ are independently selected from the group consisting of:

halogen; —HO; —SH;

—$NR^4R^5$ wherein $R^4$ and $R^5$ are independently selected from the group consisting of hydrogen, alkyl and hydroxyalkyl having 1 through 4 carbon atoms, alkenyl having 2 through 4 carbon atoms, and $R^4$ and $R^5$ together with the nitrogen atom can form a heterocyclic ring;
—$OR^3$ and —$SR^3$ wherein $R^3$ is selected from the group consisting of monovalent hydrocarbon groups, monovalent hydrocarbonoxyhydrocarbon groups each containing from 1 to 18 carbon atoms, halogenated monovalent hydrocarbon groups, each containing from 1 to 18 carbon atoms and from 1 to 3 halogens,

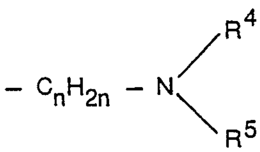

groups wherein n is from 1 to 4 and $R^4$ and $R^5$ are as above defined provided that no more than two of R, $R^1$ or $R^2$ can be —$NR^4R^5$, —$OR^3$ or —$SR^3$; and —$OR^6$ wherein $R^6$ is salt-forming cation selected from the group consisting of cations of alkali metals, alkaline earth metals, copper, zinc, manganese, nickel, ammonium, organic ammonium, provided that when the organic group is aryl the ammonium salt is a primary amine salt, and mixtures of such salts, provided that when any one of R, $R^1$ and $R^2$ is halogen the others of R, $R^1$ and $R^2$ cannot be —$OR^6$ and further provided that no more than two of R, $R^1$ or $R^2$ are —$OR^6$ when $R^6$ is ammonium or organic ammonium; and the strong acid salts of said compounds of the formula where R, $R^1$ and $R^2$ are —OH, said strong acid having a pK of 2.5 or less.

The term halogen as employed herein means chlorine, bromine iodine and fluorine."

Other derivatives of N-phosphonomethylglycine and the plant growth regulation use thereof are disclosed in U.S. Patent No. 3,853,530.

The N-trifluoroacetyl-N-phosphonomethylglycine dichloride derivatives of this invention are those having the formula

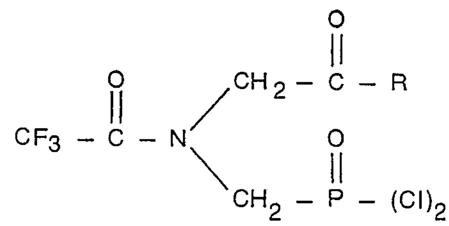

wherein R is chlorine, an alkoxy group containing from 1 to 10 carbon atoms, an alkoxyalkoxy group containing from 3 to 6 carbon atoms, an alkoxyalkoxyalkoxy group containing from 5 to 9 carbon atoms or a chloro lower alkoxy group wherein the term chloro lower alkoxy designates those alkoxy groups containing up to and including four carbon atoms in a straight or branched chain and up to and including three chlorine atoms.

Illustrative of the alkoxyalkoxy groups which R represents are methoxyethoxy, methoxypropoxy, methoxybutoxy, ethoxyethoxy, ethoxypropoxy, propoxyethoxy, propoxypropoxy and the like. Illustrative of the alkoxyalkoxyalkoxy groups represented by R are, for example, methoxyethoxyethoxy, methoxyethoxypropoxy, methoxypropoxypropoxy, methoxypropoxybutoxy, ethoxyethoxyethoxy, propoxypropoxypropoxy and the like.

The compounds of this invention are prepared by reacting an N-phosphonomethylglycine of the formula

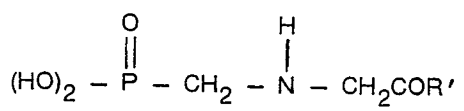

or ester thereof wherein R′ is hydroxy or an R group as hereinabove defined except that R′ cannot be chlorine with trifluoroacetic acid anhydride at temperatures from about 10°C to about 35°C and then treating the reaction product with excess thionyl chloride under refluxing conditions. For best yields, the intermediate reaction product is preferably stripped of the excess trifluoroacetic anhydride prior to the addition of the thionyl chloride. The excess thionyl chloride is removed after the reaction is completed to yield the compounds of this invention.

The compounds of this invention are useful as herbicides.

The herbicidal composition of the present invention is characterised in that said composition comprises from about 5 to about 95 parts by weight of a compound per 100 parts by weight of the total composition, characterized in that the compound has the formula

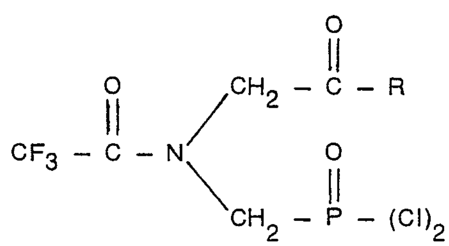

wherein R is chlorine, an alkoxy group containing from 1 to 10 carbon atoms, an alkoxyalkoxy group containing from 3 to 6 carbon atoms, an alkoxyalkoxyalkoxy group containing from 5 to 9 carbon atoms or a chloro lower alkoxy group; wherein the term chloro lower alkoxy group designates those alkoxy groups containing up to and including four carbon atoms in a straight or branched chain and up to and including three chlorine atoms; the remaining parts being composed of one or more suitable carriers, diluents and/or adjuvants.

The herbicidal method of the present invention comprises applying to plants a herbicidally effective amount of a compound characterized by the formula

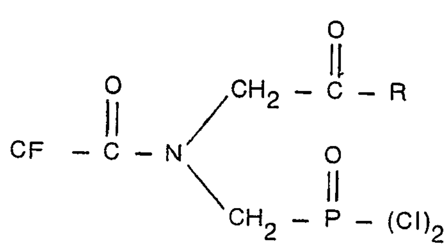

wherein R is chlorine, an alkoxy group containing from 1 to 10 carbon atoms, an alkoxyalkoxy group containing from 3 to 6 carbon atoms, an alkoxyalkoxyalkoxy group containing from 5 to 9 carbon atoms or a chloro lower alkoxy group.

The following non-limiting examples will serve to further demonstrate to those skilled in the art the manner in which specific compounds within the scope of this invention can be prepared and also their use as herbicides.

Example 1

To 100 ml trifluoroacetic anhydride (145 g, 0.69 mole) was added 60 g (0.3 mole) of ethyl N-phosphonomethylglycinate portionwise over 1.5 hours. The reaction mixture was stirred for an additional 2 hours after which a completely homogeneous solution was obtained. The solution was concentrated in vacuo first at 20 mm. then at 0.5 mm Hg. The residue (112 g) was treated with 172 g (1.45 mole) of thionyl chloride and the resulting mixture was refluxed for 2 hours. The mixture was concentrated in vacuo and triturated with hexane to afford ethyl N-trifluoroacetyl-N-dichlorophosphonomethylglycinate as white needles, 96 g (96%), m.p. 77.5—79.5°C.

Anal. Calc'd: C, 18.74; H, 1.26; N, 4.37.

Found: C, 18.94; H, 1.42; N, 4.37.

Example 2

To a mixture of 5.1 g (0.03 mole) N-(phosphonomethyl)glycine and 10 ml. trifluoroacetic acid was added 19 g (13 ml, 0.09 mole) trifluoroacetic anhydride. The solution was stirred overnight at room temperature and then concentrated in vacuo to an amorphous yellow solid (9.0 g). This material was dissolved in 25 ml. thionyl chloride and refluxed gently for 1.5 hours. The excess thionyl chloride was removed by distillation and the residual waxy solid was extracted with hot hexane. A solid product separated on cooling and was isolated by filtration and identified as N-trifluoroacetyl-N-(dichlorophosphonomethyl)glycinyl chloride in a yield of 8.3 g (92%), m.p. 78—81°C.

Anal. Calc'd: C, 18.74; H, 1.26; N, 4.37.

Found: C, 18.94; H, 1.42; N, 4.37.

Example 3

To 100 ml. (145 g, 0.69 mole) of trifluoroacetic anhydride was added slowly 68.9 g (0.306 mole) butyl N-(phosphonomethyl)glycinate. After 2 hours, the solution was concentrated in vacuo. The residue was refluxed with 125 ml. thionyl chloride for 4 hours and excess thionyl chloride was then removed by distillation to yield butyl N-trifluoroacetyl-N-(dichlorophosphonomethyl)glycinate (88.9 g), m.p. 56—58°C.

Anal. Calc'd: C, 30.19; H, 3.66; N, 3.91; P, 8.69.

Found: C, 30.19; H, 3.74; N, 3.94; P, 8.95.

Example 4

To 100 ml. (145 g, 0.69 mole) of trifluoroacetic anhydride was added slowly 66.5 g 2-methoxyethyl N-(phosphonomethyl)glycinate. After two hours, the reaction mixture was concentrated in vacuo and the residue was refluxed with 75 ml. thionyl chloride for 3 hours. Excess thionyl chloride was removed by distillation in vacuo. The residual oil was recrystallized from hexane to afford 101.1 g of 2-methoxyethyl N-trifluoroacetyl-N-(dichlorophosphonomethyl)glycinate having a m.p. 51—53.3°C.

Anal. Calc'd: C, 26.69; H, 3,08; N, 3.89; P, 8.60.

Found: C, 27.04; H, 3.21; N, 3.95; P,8.81.

Example 5

To 40 ml (58 g, 0.28 mole) trifluoroacetic anhydride was added 32.85 g (0.14 mole) 2-chloroethyl N-(phosphonomethyl)glycinate. The reaction was stirred overnight at 20°C., then concentrated in vacuo to a residual oil. This oil was treated with 70 ml thionyl chloride at reflux for 2 hours, then concentrated in vacuo to yield 2-chloroethyl N-trifluoroacetyl-N-(dichlorophosphonomethyl)glycinate as a white solid (47.6 g), m.p. 74—77°C.

Anal. Calc'd: C, 23.07; H, 2.21; N, 3.84; P, 8.50.

Found: C, 23.37; H, 2.41; N, 4.04; P, 8.54.

Example 6

To 28 ml (0.19 mole) trifluoroacetic anhydride was added 26 g (0.084 mole) n-decyl N-(phosphonomethyl)glycinate and the solution was stirred for 24 hours. The mixture was concentrated in vacuo and the residue was refluxed with 53.5 g thionyl chloride for three hours. The excess thionyl chloride was removed by distillation to afford 34.8 g of n-decyl N-trifluoroacetyl-N-(dichlorophosphonomethyl)glycinate as a white solid, m.p. 53.5—55°C.

Anal. Calc'd: C, 40.74; H, 5.70; N, 3.17.

Found: C, 41.15; H, 5.90; N, 3.21.

Example 7

The post-emergence herbicidal activity of the various compounds of this invention is demonstrated by greenhouse testing in the following manner. A good grade of top soil is placed in aluminum pans having holes in the bottom and compacted to a depth of .95 to 1.27 cm. from the top of the pan. A predetermined number of seeds of each of several dicotyledonous and monocotyledonous annula plant species and/or vegetative propagules for the perennial plant species. The seeds and/or vegetative propagules are covered with soil and leveled. The pans are then placed on a sand bench in the greenhouse and watered from below as needed. After the plants reach the desired age (two to three weeks), each pan except for the control pans is removed individually to a spraying chamber and sprayed by means of an atomizer operating at a positive air pressure of approximately 1.46 kg/cm² absolute. The atomizer contains 6 ml. of a solution or suspension of the chemical and an amount of a cyclohexanone emulsifying agent mixture so that the spray solution or suspension contains about 0.4% by weight of the emulsifier. The spray solution or suspension contains a sufficient amount of the candidate chemical in order to give application rates corresponding to those set forth in the tables. The spray solution is prepared by taking an aliquot of a 1.0% by weight stock solution or suspension of the candidate chemical in an organic solvent such as acetone or tetrahydrofuran or in water. The emulsifying agent employed is a mixture comprising 35 weight percent butylamine dodecylbenzene sulfonate and 65 weight percent of a tall oil ethylene oxide condensate having about 6 moles of ethylene oxide per mole of tall oil. The pans are returned to the greenhouse and watered as before and the injury to the plants as compared to the control is observed at approximately two and four weeks as indicated in the tables under WAT and the results recorded. In some instances, the four-week observations are omitted.

The post-emergence herbicidal activity index used in Table I is as follows:

| Plant Response | Index |
|---|---|
| 0—24% control | 0 |
| 25—49% control | 1 |
| 50—74% control | 2 |
| 75—99% control | 3 |
| 100% control | 4 |

The plant species utilized in these tests are identified by letter in accordance with the following legend:

A — Soybean

B — Sugar Beet

C — Wheat

D — Rice

E — Sorghum

F — Cocklebur

G — Wild Buckwheat

H — Morningglory

I — Hemp Sesbania

J — Lambsquarters

K — Smartweed

L — Velvetleaf

M — Downy Brome

N — Panicum Spp

O — Barnyardgrass

P — Crabgrass

Q — Nutsedge*

R — Quackgrass*

S — Johnsongrass*

T — Canada Thistle*

* — Established from vegetative propagules.

TABLE I

| Compound of Example No. | WAT | kg/h | Plant Species A | B | C | D | E | F | G | H | I | J | K |
|---|---|---|---|---|---|---|---|---|---|---|---|---|---|
| 1* | 4 | 11.2 | 4 | 4 | 4 | 4 | 4 | 4 | 2 | 3 | 3 | 3 | 4 |
| 1** | 4 | 4.8 | 1 | 2 | 4 | 2 | 2 | 1 | 1 | 1 | 1 | 0 | 2 |
| 1** | 4 | 11.2 | 2 | 3 | 4 | 2 | 4 | 0 | 1 | 1 | 1 | 1 | 3 |
| 2* | 4 | 11.2 | 2 | 3 | 4 | 3 | 4 | 2 | 1 | 3 | 2 | 4 | 3 |
| 2** | 4 | 11.2 | 0 | 1 | 1 | 1 | 1 | 1 | 0 | 0 | 0 | 0 | 0 |
| 3 | 4 | 11.2 | 1 | 3 | 3 | 2 | 2 | 2 | 2 | 3 | 3 | 2 | 3 |
| 3 | 4 | 5.6 | 1 | 2 | 1 | 2 | 4 | 1 | 2 | 4 | 3 | 2 | 3 |
| 4 | 4 | 11.2 | 3 | 4 | 4 | 3 | 4 | 4 | 3 | 4 | 3 | 4 | 4 |
| 4 | 4 | 5.6 | 1 | 2 | 0 | 2 | 4 | 3 | 3 | 3 | 2 | 0 | 3 |
| 5 | 4 | 11.2 | 3 | 3 | 4 | 3 | 3 | 4 | 3 | 2 | 3 | 2 | 3 |
| 5 | 4 | 5.6 | 2 | 3 | 2 | 1 | 0 | 2 | 2 | 0 | 2 | 1 | 3 |
| 6*** | 2 | 11.2 | 0 | 0 | 0 | 0 | 0 | 0 | 0 | 0 | 0 | 0 | 0 |

* – Dissolved, formulated and sprayed within 2 minutes.

** – Sprayed in anhydrous acetone at 935 liters /hectare.

*** – Sprayed in anhydrous tetrahydrofuran at 935 liters /hectare.

TABLE II

| Compound of Example No. | WAT | kg/h | Plant Species L | M | N | O | P | B | Q | D | R | E | F | C | J | S | K | T |
|---|---|---|---|---|---|---|---|---|---|---|---|---|---|---|---|---|---|---|
| 1** | 4 | 4.8 | 2 | 3 | 1 | 1 | 1 | 4 | 2 | 3 | 2 | 4 | 2 | 3 | 2 | 4 | 3 | 3 |
| 1 | 2 | 4.8 | 2 | 1 | 2 | 0 | 1 | 3 | 1 | 2 | 2 | 2 | 2 | 2 | 1 | 3 | 2 | 3 |
| 2 | 2 | 4.8 | 1 | 1 | 1 | 1 | 1 | 1 | 1 | 1 | 0 | 1 | 1 | 1 | 1 | 1 | 0 | 2 |
| 2** | 4 | 4.8 | 1 | 1 | 0 | 0 | 1 | 1 | 0 | 1 | 0 | 0 | 0 | 1 | 0 | 0 | 0 | 2 |
| 3 | 4 | 5.6 | 2 | 4 | 4 | 1 | 4 | 4 | 3 | 3 | 4 | 4 | 4 | 3 | 4 | 4 | 4 | 4 |
| 3 | 4 | 1.12 | 1 | 4 | 1 | 0 | 1 | 2 | 1 | 2 | 3 | 4 | 4 | 1 | 2 | 4 | 3 | 4 |
| 4 | 4 | 5.6 | 3 | 4 | 4 | 3 | 4 | 4 | 4 | 4 | 4 | 4 | 4 | 3 | 4 | 4 | 4 | 4 |
| 4 | 4 | 1.12 | 1 | 2 | 1 | 1 | 3 | 2 | 2 | 2 | 1 | 2 | 3 | 1 | 3 | 4 | 3 | 3 |
| 5 | 4 | 5.6 | 3 | 4 | 4 | 4 | 4 | 3 | 3 | 4 | 4 | 4 | 4 | 4 | 4 | 4 | 4 | 4 |
| 5 | 4 | 1.12 | 1 | 2 | 1 | 1 | 3 | 3 | 2 | 2 | 1 | 4 | 3 | 2 | 2 | 4 | 4 | 4 |
| 6*** | 4 | 5.6 | 1 | 0 | 0 | 0 | 0 | 0 | 0 | 1 | 0 | 2 | 2 | 0 | 0 | 2 | 0 | 3 |

** – Sprayed in anhydrous acetone at 935 liters /hectare.

*** – Sprayed in anhydrous tetrahydrofuran at 1870 liters /hectare.

From the test results presented in Tables I and II, it can be seen that the post-emergent herbicidal activity of the compounds of this invention is, for the most part, general in nature. In certain specific instances, however, some selectivity is demonstrated. In this regard it should be recognized that each individual species selected for the above tests is a representative member of a recognized family of plant species.

The herbicidal compositions, including concentrates which require dilution prior to application to the plants, of this invention contain from 5 to 95 parts by weight of at least one compound of this invention and from 5 to 95 parts by weight of an adjuvant in liquid or solid form, for example, from 0.25 to 25 parts by weight of wetting agent, from 0.25 to 25 parts by weight of a dispersant and from 4.5 to 94.5 parts by weight of inert liquid extender, e.g., water, acetone, tetrahydrofuran, all parts being by weight of the total composition. Where required, from 0.1 to 2.0 parts by weight of the inert liquid extender can be replaced by a corrosion inhibitor or anti-foaming agent, or both. The compositions are prepared by admixing the active ingredient with an adjuvant including diluents, extenders, carriers and conditioning agents to provide compositions in the form of finely-divided particulate solids, pellets, solutions, dispersions or emulsions. Thus, the active ingredient can be used with an adjuvant such as a finely-divided solid, a liquid or organic origin, water, a wetting agent, a dispersing agent, an emulsifying agent or any suitable combination of these.

The herbicidal compositions of this invention, particularly liquids and soluble powders, preferably contain as a conditioning agent one or more surface-active agents in amounts sufficient to render a given composition readily dispersible in water or in oil. The incorporation of a surface-active agent into the compositions greatly enhances their efficacy. By the term "surface-active agent", it is understood that wetting agents, dispersing agents, suspending agents and emulsifying agents are included therein. Anionic, cationic and nonionic agents can be used with equal facility.

Preferred wetting agents are alkyl benzene and alkyl naphthalene sulfonates, sulfated fatty alcohols, amines or acid amides, long chain acid esters of sodium isothionate, esters of sodium sulfosuccinate, sulfated or sulfonated fatty acid esters, petroleum sulfonates, sulfonated vegetable oils, polyoxyethylene derivatives of phenols and alkylphenols (particularly isooctylphenol and nonylphenol) and polyoxyethylene derivatives of the mono- higher fatty acid esters of hexitol anhydrides (e.g., sorbitan). Preferred dispersants are methyl cellulose, polyvinyl alcohol, sodium lignin sulfonates, polymeric alkyl naphthalene sulfonates, sodium naphthalene sulfonate, polymethylene bisnaphthalenesulfonate and sodium N-methyl-N-(long chain acid) taurates.

The application of an effective amount of the compounds of this invention to the plant is essential and critical for the practice of the present invention. The exact amount of active ingredient to be employed is dependent upon the response desired in the plant as well as such other factors as the plant species and stage of development thereof, and the amount of rainfall as well as the specific glycine employed. In foliar treatment for the control of vegetative growth, the active ingredients are applied in amounts from 0.112 to 22.4 or more kilograms per hectare. In pre-emergent treatments, the rate of application can be from 0.56 to 22.4 or more kilograms per hectare. In applications for the control of aquatic plants, the active ingredients are applied in amounts of from 0.01 parts per million to 1000 parts per million, based on the aquatic medium. An effective amount for phytotoxic or herbicidal control is that amount necessary for overall or selective control, i.e., a phytotoxic or herbicidal amount. It is believed that one skilled in the art can readily determine from the teachings of this specification, including examples, the approximate application rate.

Although this invention has been described with respect to specific modifications, the details thereof are not to be construed as limitations, for it will be apparent that various equivalents, changes and modifications may be resorted to without departing from the scope thereof and it is understood that such equivalent embodiments are intended to be included herein.

**Claims**

1. A compound characterized by the formula

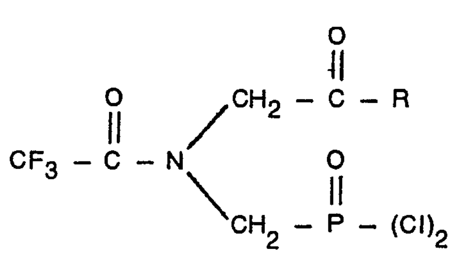

wherein R is chlorine, an alkoxy group containing from 1 to 10 carbon atoms, an alkoxyalkoxy group containing from 3 to 6 carbon atoms, and alkoxyalkoxyalkoxy group containing from 5 to 9 carbon atoms or a chloro lower alkoxy group wherein the term chloro lower alkoxy designates those alkoxy groups containing up to and including four carbon atoms in a straight or branched chain and up to and including three chlorine atoms.

2. A compound of Claim 1 characterized in that R is ethoxy, butoxy, methoxyethoxy or chloroethoxy.

3. A herbicidal composition characterized in that said composition comprises from 5 to 95 parts by weight of a compound per 100 parts by weight of total composition characterized in that the compound has the formula

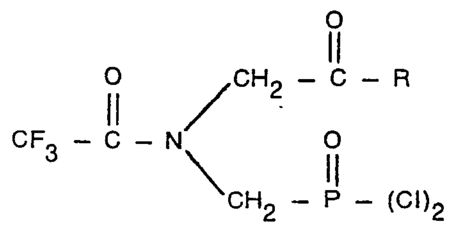

wherein R is chlorine, an alkoxy group containing from 1 to 10 carbon atoms, an alkoxyalkoxy group containing from 3 to 6 carbon atoms, an alkoxyalkoxyalkoxy group containing from 5 to 9 carbon atoms or a chloro lower alkoxy group; wherein the term chloro lower alkoxy designates those alkoxy groups containing up to and including four carbon atoms in a straight or branched chain and up to and including three chlorine atoms; the remaining parts being composed of one or more suitable carriers, diluents and/or adjuvants.

4. A composition of Claim 3 characterized in that R is ethoxy, butoxy, methoxyethyloxy or chloroethoxy.

5. A herbicidal method characterized by applying to plants a herbicidally effective amount of a compound characterized by the formula

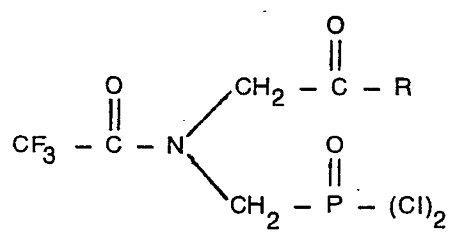

wherein R is chlorine, an alkoxy group containing from 1 to 10 carbon atoms, an alkoxyalkoxy group containing from 3 to 6 carbon atoms, an alkoxyalkoxyalkoxy group containing from 5 to 9 carbon atoms or a chloro lower alkoxy group wherein the term chloro lower alkoxy designates those alkoxy groups containing up to and including four carbon atoms in a straight or branched chain and up to three chlorine atoms.

6. A method of Claim 5 characterized in that R is ethoxy butoxy, methoxy or chloroethoxy.

7. A process for the production of a compound characterized by the formula

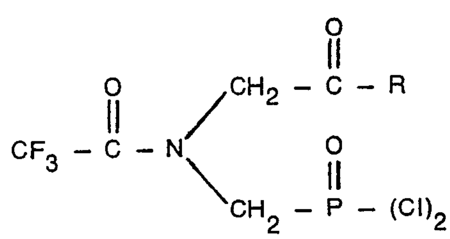

wherein R is chlorine, an alkoxy group containing from 1 to 10 carbon atoms, an alkoxyalkoxy group containing from 3 to 6 carbon atoms, an alkoxyalkoxyalkoxy group containing from 5 to 9 carbon atoms or a chloro lower alkoxy group wherein the term chloro lower alkoxy designates those alkoxy groups containing up to an including four carbon atoms in a straight or branched chain and up to and including three chlorine atoms which comprises reacting a compound of the formula

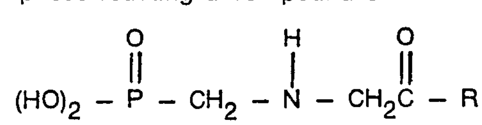

wherein R′ is hydroxy, an alkoxy group containing from 1 to 10 carbon atoms, an alkoxyalkoxy group containing from 3 to 6 carbon atoms, an alkoxyalkoxyalkoxy group containing from 5 to 9 carbon atoms or a chloro lower alkoxy group wherein the term chloro lower alkoxy designates those alkoxy groups

containing up to and including four carbon atoms in a straight or branched chain and up to and including three chlorine atoms with trifluoroacetic anhydride at a temperature of from 10°C to 35°C. and reacting the resulting product with thionyl chloride at reflux temperature.

**Revendications**

1. Composé, caractérisé en ce qu'il a la formule:

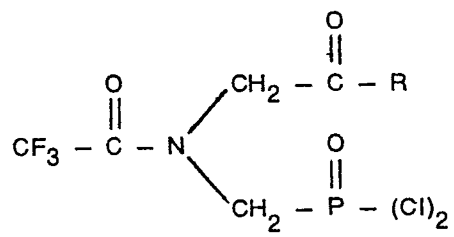

où R est le chlore, un groupe alcoxy contenant 1 à 10 atomes de carbone, un groupe alcoxyalcoxy contenant 3 à 6 atomes de carbone, un groupe alcoxyalcoxyalcoxy contenant 5 à 9 atomes de carbone ou un groupe chloroalcoxy inférieur où l'expression "chloroalcoxy inférieur" désigne les groupes alcoxy contenant jusqu'à et y compris 4 atomes de carbone dans une chaîne droite ou ramifiée et jusqu'à et y compris 3 atomes de chlore.

2. Composé selon la revendication 1, caractérisé en ce que R est le groupe éthoxy, butoxy, méthoxyéthoxy ou chloroéthoxy.

3. Composition herbicide, caractérisée en ce qu'elle comprend 5 à 95 parties en poids d'un composé pour 100 parties en poids de la composition totale, le composé ayant la formule:

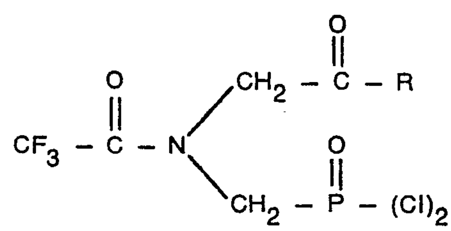

où R est le chlore, un groupe alcoxy contenant 1 à 10 atomes de carbone, un groupe alcoxyalcoxy contenant 3 à 6 atomes de carbone, un groupe alcoxyalcoxyalcoxy contenant 5 à 9 atomes de carbone ou un groupe chloroalcoxy inférieur, où l'expression "chloroalcoxy inférieur" désigne des groupes alcoxy contenant jusqu'à et y compris 4 atomes de carbone dans une chaîne droite ou ramifiée et jusqu'à et y compris 3 atomes de chlore; les parties restantes étant composées d'un ou de plusieurs supports convenables, diluants convenable et/ou adjuvants convenables.

4. Composition selon la revendication 3, caractérisée en ce que R est le groupe éthoxy, butoxy, méthoxyéthoxy ou chloroéthoxy.

5. Procédé herbicide, caractérisé en ce qu'on applique aux plantes une quantité, efficace du point de vue herbicide, d'un composé ayant la formule:

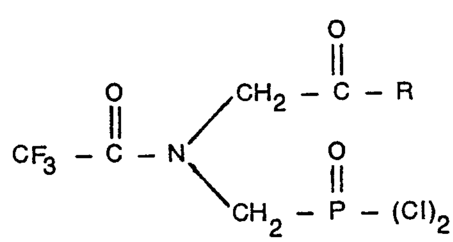

où R est le chlore, un groupe alcoxy contenant 1 à 10 atomes de carbone, un groupe alcoxyalcoxy contenant 3 à 6 atomes de carbone, un groupe alcoxyalcoxyalcoxy contenant 5 à 9 atomes de carbone ou un groupe chloroalcoxy inférieur, où l'expression "chloroalcoxy inférieur" désigne les groupes alcoxy contenant jusqu'à et y compris 4 atomes de carbone dans une chaîne droite ou ramifiée et jusqu'à trois atomes de chlore.

6. Procédé selon la revendication 5, caractérisé en ce que R est le groupe éthoxy, butoxy, méthoxyéthoxy ou chloroéthoxy.

7. Procédé pour la production d'un composé caractérisé par la formule:

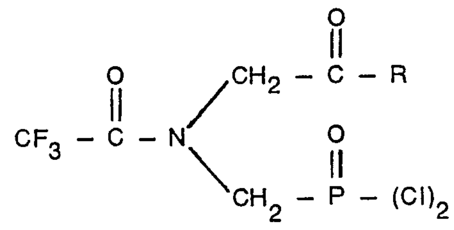

où R est le chlore, un groupe alcoxy contenant 1 à 10 atomes de carbone, un groupe alcoxyalcoxy contenant 3 à 6 atomes de carbone, un groupe alcoxyalcoxyalcoxy contenant 5 à 9 atomes de carbone ou un groupe chloroalcoxy inférieur, où l'expression "chloroalcoxy inférieur" désigne les groupes alcoxy contenant jusqu'à et y compris 4 atomes de carbone dans une chaîne droite ou ramifiée et jusqu'à et y compris 3 atomes de chlore qui consiste à faire réagir un composé ayant la formule:

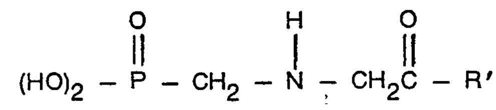

où R' est le groupe hydroxy, un groupe alcoxy contenant 1 à 10 atomes de carbone, ou groupe alcoxyalcoxy contenant 3 à 6 atomes de carbone, un groupe alcoxyalcoxyalcoxy contenant 5 à 9 atomes de carbone ou un groupe chloroalcoxy inférieur où l'expression "chloroalcoxy inférieur" désigne les groupes alcoxy contenant jusqu'à et y compris 4 atomes de carbone dans une chaîne droite ou ramifiée et jusqu'à et y compris 3 atomes de chlore, avec de l'anhydride trifluoroacétique, à une température de 10°C à 35°C et à faire réagir le produit résultant avec du chlorure de thionyle à la température de reflux.

**Patentansprüche**

1. Verbindung der Formel

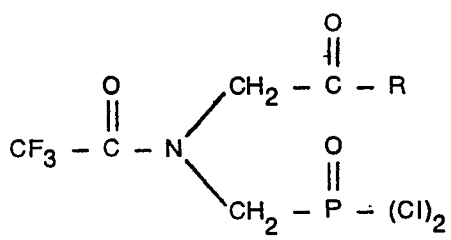

worin R ein Chloroatom, eine Alkoxygruppe mit 1 bis 10 Kohlenstoffatomen, eine Alkoxyalkoxygruppe mit 3 bis 6 Kohlenstoffatomen, eine Alkoxyalkoxyalkoxygruppe mit 5 bis 9 Kohlenstoffatomen oder eine Chlorniedrigalkoxygruppe bedeutet, wobei der Begriff "Chlor-niedrigalkoxy" jene Alkoxygruppen umfaßt, die bis zu einschließlich 4 Kohlenstoffatomen in gerader oder verzweigter Kette und bis zu einschließlich 3 Chloroatome aufweisen.

2. Verbindung nach Anspruch 1, dadurch gekennzeichnet, daß R für eine Äthoxygruppe, eine Butoxygruppe, eine Methoxyäthoxygruppe oder eine Chloräthoxygruppe steht.

3. Herbicides Mittel, dadurch gekennzeichnet, daß es pro 100 Gew.-Teile des gesamten Mittels 5 bis 95 Gew.-Teile einer Verbindung der Formel

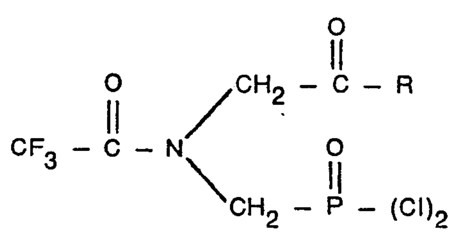

worin R ein Chloratom, eine Alkoxygruppe mit 1 bis 10 Kohlenstoffatomen, eine Alkoxyalkoxygruppe mit 3 bis 6 Kohlenstoffatomen, eine Alkoxyalkoxyalkoxygruppe mit 5 bis 9 Kohlenstoffatomen oder eine Chlorniedrigalkoxygruppe bedeutet, wobei der Begriff "Chlor-niedrigalkoxy" jene Alkoxygruppen umfaßt, die bis zu einschließlich 4 Kohlenstoffatomen in gerader oder verzweigter Kette und bis zu einschließlich 3 Chloratome aufweisen, und als Rest einen oder mehrere geeignete Träger, Verdünnungsmittel und/oder Hilfsstoffe enthält.

4. Mittel nach Anspruch 3, dadurch gekennzeichnet, daß R für eine Äthoxygruppe, eine Butoxygruppe, eine Methoxyäthyloxygruppe oder eine Chloräthoxygruppe steht.

5. Herbicides Verfahren, dadurch gekennzeichnet, daß man auf die Pflanzen eine herbicid wirksame Menge einer Verbindung der Formel

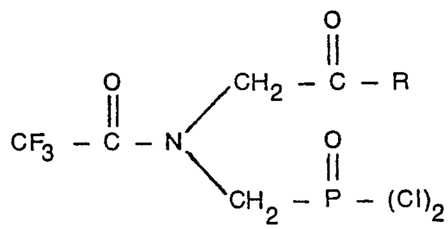

worin R ein Chloratom, eine Alkoxygruppe mit 1 bis 10 Kohlenstoffatomen, eine Alkoxyalkoxygruppe mit 3 bis 6 Kohlenstoffatomen, eine Alkoxyalkoxyalkoxygruppe mit 5 bis 9 Kohlenstoffatomen oder eine Chlorniedrigalkoxygruppe bedeutet, wobei der Begriff "Chlor-niedrigalkoxy" jene Alkoxygruppen umfaßt, die bis zu einschließlich 4 Kohlenstoffatomen in gerader oder verzweigter Kette und bis zu einschließlich 3 Chloratome aufweisen, aufträgt.

6. Verfahren nach Anspruch 5, dadurch gekennzeichnet, daß R für eine Äthoxygruppe, eine Butoxygruppe, eine Methoxyäthoxygruppe oder eine Chloräthoxygruppe steht.

7. Verfahren zur Herstellung einer Verbindung der Formel

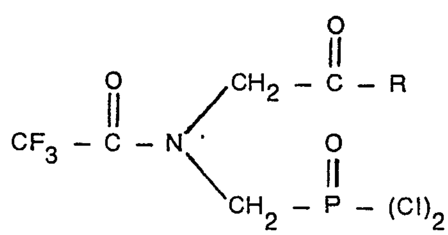

worin R ein Chloratom, eine Alkoxygruppe mit 1 bis 10 Kohlenstoffatomen, eine Alkoxyalkoxygruppe mit 3 bis 6 Kohlenstoffatomen, eine Alkoxyalkoxyalkoxygruppe mit 5 bis 9 Kohlenstoffatomen oder eine Chlorniedrigalkoxygruppe bedeutet, wobei der Begriff "Chlor-niedrigalkoxy" jene Alkoxygruppen umfaßt, die bis zu einschließlich 4 Kohlenstoffatomen in gerader oder verzweigter Kette und bis zu einschließlich 3 Chloratome aufweisen, dadurch gekennzeichnet, daß man eine Verbindung der Formel

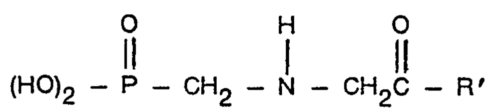

worin R' für eine Hydroxygruppe, eine Alkoxygruppe mit 1 bis 10 Kohlenstoffatomen, eine Alkoxyalkoxygruppe mit 3 bis 6 Kohlenstoffatomen, eine Alkoxyalkoxyalkoxygruppe mit 5 bis 9 Kohlenstoffatomen oder eine Chlor-niedrigalkoxygruppe bedeutet, worin der Begriff "Chlor-niedrigalkoxy" jene Alkoxygruppen umfaßt, die bis zu einschließlich 4 Kohlenstoffatome in gerader oder verzweigter Kette und bis zu einschließlich 3 Chloratome aufweisen, mit Trifluoressigsäureanhydrid bei einer Temperatur von 10 bis 35°C umsetzt und das erhaltene Produkt mit Thionylchlorid bei der Rückflußtemperatur zur Reaktion bringt.